# EUROPÄISCHE PATENTSCHRIFT

(11) **EP 2 717 109 B1**
(45) Veröffentlichungstag und Bekanntmachung des Hinweises auf die Patenterteilung: **26.08.2015**
(21) Anmeldenummer: 12006872.1
(22) Anmeldetag: 04.10.2012
(51) Int. Cl.: H02J 7/00, B25J 19/00

(54) **Ladevorrichtung für ein selbstfahrendes Arbeitsgerät**
Loading device for a self-propelled work device
Dispositif de chargement pour un appareil de travail autopropulsé

(43) Veröffentlichungstag der Anmeldung: 09.04.2014
(73) Patentinhaber: Viking GmbH, 6336 Langkampfen-Kufstein (AT)
(72) Erfinder: Schäfer, Frieder, 6330 Kufstein (AT)
(74) Vertreter: Wasmuth, Rolf

(56) Entgegenhaltungen:
- EP-A1- 1 302 147
- EP-A2- 2 375 301
- WO-A1-99/38056

## Beschreibung

Die Erfindung betrifft eine Ladevorrichtung für ein selbstfahrendes Arbeitsgerät mit einem Gehäuse nach dem Oberbegriff des Anspruchs 1.

Eine derartige Ladevorrichtung ist aus der EP 1 302 147 A1 bekannt. Das Arbeitsgerät fährt in Einfahrrichtung in eine Ladestation ein, wobei eine Nase des Arbeitsgerätes über eine Schrägfläche angehoben und nach oben gedrückt wird. Ein auf der Oberseite des Gehäuses vorgesehener elektrischer Gerätekontakt, der mit dem Energiespeicher im Arbeitsgerät in Verbindung steht, wird an einen federnden Ladekontakt der Ladestation angedrückt, um eine elektrische Kontaktierung zu erzielen.

Bei dieser Art der Kontaktierung sind die nach außen offenen Kontakte durch Schmutz usw. belastet, was zu einer mangelhaften Kontaktierung oder zu einer Kontaktierung mit hohem Übergangswiderstand führt. Ein hoher Übergangswiderstand führt bei hohen Ladeströmen zu erheblicher Erwärmung, was zu einer Verformung oder Beschädigung der meist aus Kunststoff bestehenden Gehäuseteile des Arbeitsgerätes und der Ladestation führen kann.

Der Erfindung liegt die Aufgabe zugrunde, eine Ladevorrichtung für ein selbstfahrendes Arbeitsgerät zu schaffen, bei der auch unter ungünstigen Umgebungsbedingungen die Ladekontakte mit den Gerätekontakten bei geringem Übergangswiderstand eine sichere Kontaktierung erzielen.

Die Aufgabe wird erfindungsgemäß nach den kennzeichnenden Merkmalen des Anspruchs 1 gelöst.

Die Anordnung des Gerätekontaktes im Inneren des Lademauls des Arbeitsgerätes gewährleistet einen Schutz vor Verschmutzung oder Beschädigung. Die Kontaktierung des Gerätekontaktes mit dem Ladekontakt über einen Ladedorn der Ladestation stellt sicher, dass der Gerätekontakt tief im Gehäuse des Arbeitsgerätes geschützt angeordnet werden kann.

Um die Kontaktierung zwischen Gerätekontakt und Ladekontakt auszuführen, fährt das Arbeitsgerät in die Ladestation ein, wobei der Ladedorn im Lademaul zielgerichtet geführt ist, bis er in seine Endstellung im Arbeitsgerät eingefahren ist. Zumindest in dieser Endstellung liegen die Ladekontakte an den Gerätekontakten an, so dass der Energiespeicher aufgeladen werden kann. Dabei ist das in die Ladestation eingefahrene Arbeitsgerät in seiner Ladestellung in der Ladestation gesichert, insbesondere an der Ladestation verrastet.

Zur Verrastung des Arbeitsgerätes an der Ladestation ist vorgesehen, am Ladedorn ein Rastelement auszubilden, das in der in der Ladestation eingefahrenen Ladestellung des Arbeitsgerätes mit einem Rastgegenelement des Arbeitsgerätes verrastend zusammenwirkt, wobei das Rastgegenelement vorteilhaft im Lademaul vorgesehen ist.

In zweckmäßiger Ausgestaltung der Erfindung ist zur Verrastung des Arbeitsgerätes das Rastelement eine am Ladedorn ausgebildete Rasterhebung und das Rastgegenelement eine im Lademaul ausgebildete Rastaufnahme; es kann auch vorteilhaft sein, das Rastelement als eine am Ladedorn ausgebildete Rastvertiefung auszubilden, dem als Rastgegenelement eine am Gehäuse ausgebildete Rastrippe zugeordnet ist.

Zweckmäßig ist eine in Fahrtrichtung auf den Ladedorn ansteigende Rampe vorgesehen, die beim Einfahren des Arbeitsgerätes in die Ladestation das Arbeitsgerät anhebt, bis das Rastelement mit dem Rastgegenelement verrastet ist. Ist das Rastelement des Ladedorns in ein Rastgegenelement des Arbeitsgerätes eingefahren, wird diese Ladestellung durch die Rastkraft gesichert, die einem Teilgewicht des Arbeitsgerätes entsprechen kann.

Die Rampe kann in einem ersten Ausführungsbeispiel als eine das Lademaul begrenzende Gehäusefläche ausgebildet sein, die in Fahrtrichtung des Arbeitsgerätes in die Ladestation auf den Ladedorn aufläuft.

Die Rampe kann als ebene, durchgehende Fläche ausgebildet sein; zweckmäßig ist die Rampe aus in Längsrichtung des Lademauls verlaufenden Rippen ausgebildet.

Nach der Erfindung ist vorgesehen, dass die Rampe an ihrem im Lademaul liegenden inneren Ende in die Rastaufnahme übergeht, wodurch eine Verrastung erst nach vollständig ausgerichtetem Einfahren des Ladedorns in das Lademaul auftritt. Dabei sind zweckmäßig die Gerätekontakte und die Ladekontakte in zueinander benachbarten Seitenflächen von Lademaul und Ladedorn vorgesehen. Es kann vorteilhaft sein, erst im Zeitpunkt der Verrastung die elektrische Verbindung herzustellen.

Die Rasterhebung des Ladedorns ist insbesondere ein Rastnocken, der der Rampe zugewandt liegt. Die Rasterhebung ist dabei am freien Ende des Ladedorns angeordnet und bildet einen Kopf des Ladedorns.

Die Maulöffnung des Lademauls ist größer, vorzugsweise mehrfach größer als das freie Ende des Ladedorns, so dass ein einfaches Einfangen des Ladedorns beim Einfahren in die Ladestation gesichert ist. Eventuelle Abweichungen von der optimalen Ausrichtung zueinander werden durch das zum inneren Ende zulaufende Lademaul korrigiert und ausgeglichen.

Um nach einem Ladevorgang eine einfache Aufhebung der Verrastung zu erzielen, ist vorgesehen, dass das Rastelement und das Rastgegenelement gerundet sind. Vorzugsweise sind das Rastelement und das Rastgegenelement kugel- oder kugelkappenförmig gerundet bzw. als Kugel bzw. Kugelkappe ausgebildet.

Das Lademaul erstreckt sich vorteilhaft in einer Längsrichtung, die der Einfahrrichtung des Arbeitsgerätes in die Ladestation entspricht. Dabei ist das Lademaul mit in Fahrtrichtung auf den Ladedorn sich erstreckenden, inneren, den Ladedorn führenden Flächen ausgebildet.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer Seitenansicht ein selbstfahrendes Arbeitsgerät vor der Einfahrt in die Ladestation,
- Fig. 2: in schematischer Darstellung einen in ein Lademaul des Arbeitsgerätes teilweise eingefahrenen Ladedorn der Ladestation,
- Fig. 3: eine Darstellung gemäß Fig. 2 mit in das Lademaul vollständig eingefahrenem Ladedorn,
- Fig. 4: eine Stirnansicht auf ein im Gehäuse ausgebildetes Lademaul,
- Fig. 5: ein weiteres Ausführungsbeispiel eines im Gehäuse des Arbeitsgerätes ausgebildeten Lademauls,
- Fig. 6: eine Ansicht eines weiteren Ausführungsbeispiels eines Lademauls in einem Arbeitsgerät,
- Fig. 7: eine Frontansicht eines Arbeitsgerätes mit einem Lademaul nach Fig. 6,
- Fig. 8: eine schematische Ansicht auf ein weiteres Ausführungsbeispiel eines Ladedoms einer Ladestation.

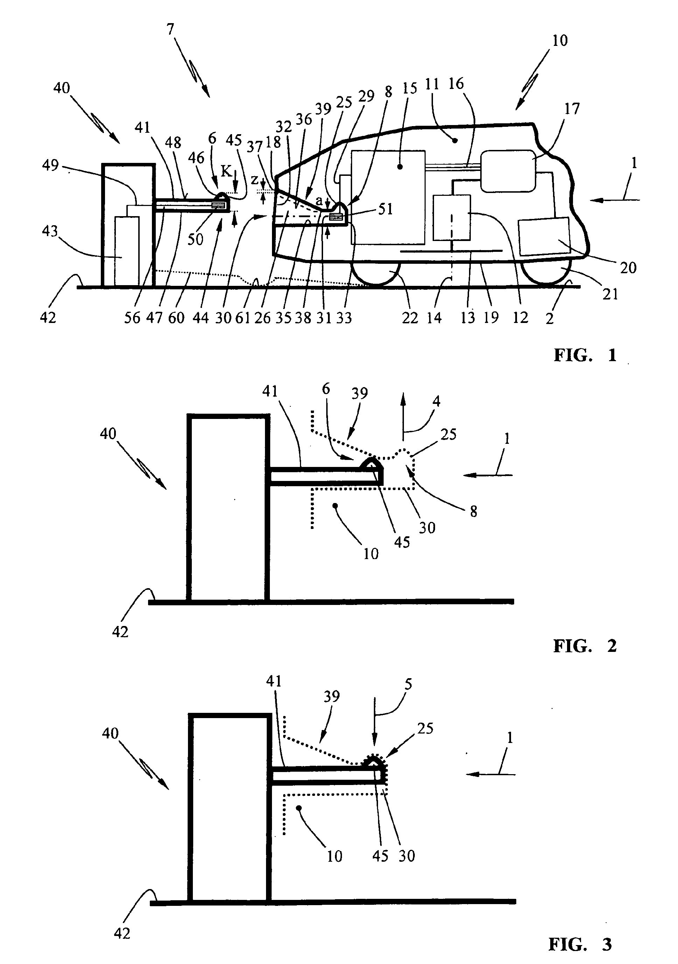

In Fig. 1 ist mit "10" ein selbstfahrendes Arbeitsgerät bezeichnet, welches sich vor einer Ladestation 40 befindet Das Arbeitsgerät 10 soll mit der Ladestation 40 kontaktiert werden, wozu das Arbeitsgerät 10 in Fahrrichtung 1 auf das Ladegerät 43 zufährt.

Das selbstfahrende Arbeitsgerät 10 besteht im Wesentlichen aus einem Gehäuse 11, in dem ein elektrischer Antriebsmotor 12 zum Antreiben eines Arbeitswerkzeugs 13 vorgesehen ist. Im gezeigten Ausführungsbeispiel ist das selbstfahrende Arbeitsgerät ein Rasenmäher; das Arbeitswerkzeug 13 ist ein um eine Achse 14 rotierendes Messerblatt.

Die zum Betrieb des elektrischen Antriebsmotors 12 notwendige Energie wird durch einen Energiespeicher 15 bereitgestellt, der ebenfalls im Gehäuse 11 aufgenommen ist. Der Energiespeicher ist bevorzugt ein Akku, insbesondere ein Lithium-Ionen-, Lithium-Phosphat- oder Lithium-Eisen-Akku. Es kann zweckmäßig sein, den Energiespeicher 15 aus Nickel-Cadmium-Zellen, Nickel-Metallhydrid-Zellen oder anderen Energiespeichern aufzubauen. Auch andere chemische Ausbildungen des Akkus sind zweckmäßig.

Über Steuer- und Energieleitungen 16 ist der Energiespeicher 15 mit einer Steuerung 17 verbunden, die den insbesondere als EC-Motor ausgebildeten elektrischen Antriebsmotor 12 ansteuert und darüber hinaus den Betriebszustand des Energiespeichers 15 überwacht.

Im Gehäuse 11 ist ferner ein Fahrantrieb 20 vorgesehen, über den insbesondere Hinterräder 21 des Arbeitsgerätes 10 antreibbar sind. Im gezeigten Ausführungsbeispiel sind die Vorderräder 22 frei drehbar, also selbstlenkend Die Vorderräder 22 können alternativ in gleicher Weise über einen Fahrantrieb angetrieben sein wie die Hinterräder 21. Zweckmäßig können die Hinterräder 22 frei drehbar oder auch lenkbar ausgeführt sein.

Das Gehäuse 11 weist eine in Fahrtrichtung 1 vorne liegende Stirnseite 18 auf, in der ein nach außen offenes Lademaul 30 ausgebildet ist. Das Lademaul 30 erstreckt sich in Richtung einer Längsachse 31, die sich im Wesentlichen parallel zur Fahrtrichtung 1 und - nach Ausrichtung des Arbeitsgerätes 10 zu einem Ladedorn 41 der Ladestation 40 - auch parallel zu dem Ladedorn 41 der Ladestation 40 erstreckt. Die Längsachse 31 des Lademauls 30 liegt zweckmäßig in der Längsmittelachse des Arbeitsgerätes 10 selbst, zumindest aber parallel zu dieser Längsmittelachse.

Das Lademaul 30 hat eine Maulöffnung 32 und verjüngt sich in Richtung auf ein inneres Ende 33 des Lademauls in das Gehäuse 11 hinein. Vorzugsweise verjüngt sich das Lademaul 30 von der in der Stirnseite 18 liegenden Maulöffnung 32 insbesondere trichterartig oder konisch zum inneren Ende 33, so dass ein in die Maulöffnung 32 eintauchender Ladedom 41 der Ladestation 40 in der größeren Maulöffnung 32 leicht gefangen und in Richtung auf das hintere Ende 33 des Lademauls zielgerichtet geführt werden kann.

In einem ersten Ausführungsbeispiel nach den Fig. 1 bis 3 weist das Lademaul 30 eine untere Fläche 35 auf, die sich im Wesentlichen parallel zur Bodenfläche 19 des Gehäuses 11 erstreckt. Die Bodenfläche 19 und die untere Fläche 35 des Lademauls 30 liegen etwa parallel zu einem Boden 42 der Ladestation 40. Der Boden 42 liegt etwa in gleicher Höhe wie die Rasenfläche 2, die durch das selbstfahrende Arbeitsgerät 10 zu bearbeiten ist, nämlich zu mähen ist.

Eine obere Fläche 36 des Lademauls bildet eine Rampe 39, deren inneres Ende 38 mit einem Abstand a zur unteren Fläche 35 liegt; das äußere Ende 37 der Rampe 39 bildet den oberen Rand der Maulöffnung 32. Seitenflächen 26 begrenzen das Lademaul 30 in der Horizontalen.

Die obere Fläche 36 der Rampe 39 geht an ihrem inneren Ende 38 in eine Rastaufnahme 25 über, deren Öffnung der unteren Fläche 35 zugewandt liegt und die ein Rastgegenelement 8 zu einem Rastelement 6 an dem Ladedorn 41 der Ladestation 40 bildet. Der Abstand a des unteren Endes der Rampe 39 von der unteren Fläche 35 ist geringfügig größer als die Höhe K des Kopfes 44 des Ladedorns 41. Dadurch ist sichergestellt, dass der Kopf 44 des Ladedorns 41 das innere Ende 38 der Rampe 39 überfahren kann, so dass ein Rastelement 6 des Ladedorns 41 unter die Rastaufnahme 25 des Rastgegenelementes 8 fahren kann, wodurch das Arbeitsgerät 10 unter Wirkung der Schwerkraft auf der als Rastnocken 46 ausgebildeten Rasterhebung 45 des Rastelementes 6 verrastet.

Der Ladedorn 41 der Ladestation 40 besteht aus einem stabförmigen Grundkörper 47, der im Querschnitt rund oder rechteckig ausgebildet sein kann. Auf der dem Boden 42 der Ladestation 40 abgewandten Oberseite 48 ist im Bereich des freien Endes des Grundkörpers 47 als Rastelement 6 die Rasterhebung 45 bzw. der Rastnocken 46 vorgesehen, wodurch der Kopf 44 des Ladedorns 41 gebildet ist. Das in der Ladestation 40 vorgesehene Ladegerät 43 ist über eine Leitung 49 mit elektrischen Ladekontakten 50 verbunden. Die Ladekontakte 50 können an jeder geeigneten Stelle der Ladestation 40 und/oder des Ladedorns 41 vorgesehen sein, z. B. auf Seitenflächen, Ober- oder Unterseite des Ladedorns 41, auf Seitenflächen der Ladestation 40 usw.. Die Ladekontakte 50 können durch räumlich begrenzte, elektrisch leitfähige Flächen oder auch durch umlaufende Flächen, Bänder oder dgl. gebildet sein. Im Ausführungsbeispiel ist auf je einer Seitenfläche 56 des Ladedorns 41 eine konstruktiv begrenzte, leitfähige Fläche als Ladekontakt 50 vorgesehen, die zweckmäßig federnd ausgebildet sind. Einem Ladekontakt 50 ist im Lademaul 30 ein Gerätekontakt 51 zugeordnet, der auf einer der Seitenflächen 26 im Lademaul 30 vorgesehen ist, bevorzugt im Bereich des hinteren Endes 33 des Lademauls 30. Auch die Gerätekontakte 51 können entsprechend der Anordnung der zugeordneten Ladekontakte 50 an geeigneter Stelle am Arbeitsgerät 10 vorgesehen sein.

Im Ausführungsbeispiel nach den Fig. 1 bis 3 sind zwei Ladekontakte 50 vorgesehen, die jeweils auf einer Seitenfläche 56 des Ladedorns 41 vorzugsweise im Bereich von dessen Kopf 44 angeordnet sind. Entsprechend sind in den beiden Seitenflächen 26 des Lademauls 30 vorzugsweise federnde Gerätekontakte 51 vorgesehen, wobei jeweils ein federnder Gerätekontakt 51 einer Seitenfläche 26 einem Ladekontakt 50 auf einer Seitenfläche 56 des Ladedorns 41 zugeordnet ist. Die vorzugsweise federnden Gerätekontakte 51 im Lademaul 30 sind über Leitungen 29 mit dem Energiespeicher 15 oder einer Ladeschaltung des Energiespeichers 15 verbunden.

Zum Aufladen des Energiespeichers 15 des selbstfahrenden Arbeitsgerätes 10 richtet sich das Arbeitsgerät 10 selbstständig vor der Ladestation 40 aus, wozu die Steuerung 17 entsprechende Befehle an den Fahrantrieb 20 sendet. Ist das Arbeitsgerät 10 in etwa vor der Ladestation 40 ausgerichtet, zeigt der Ladedorn 41 in Richtung auf die Maulöffnung 32 des Lademauls 30.

Die Maulöffnung 32 ist dabei so gestaltet, dass der Kopf 44 des Ladedorns 41 leicht gefangen und über die Flächen des Lademauls zur inneren Rastaufnahme 25 geführt wird.

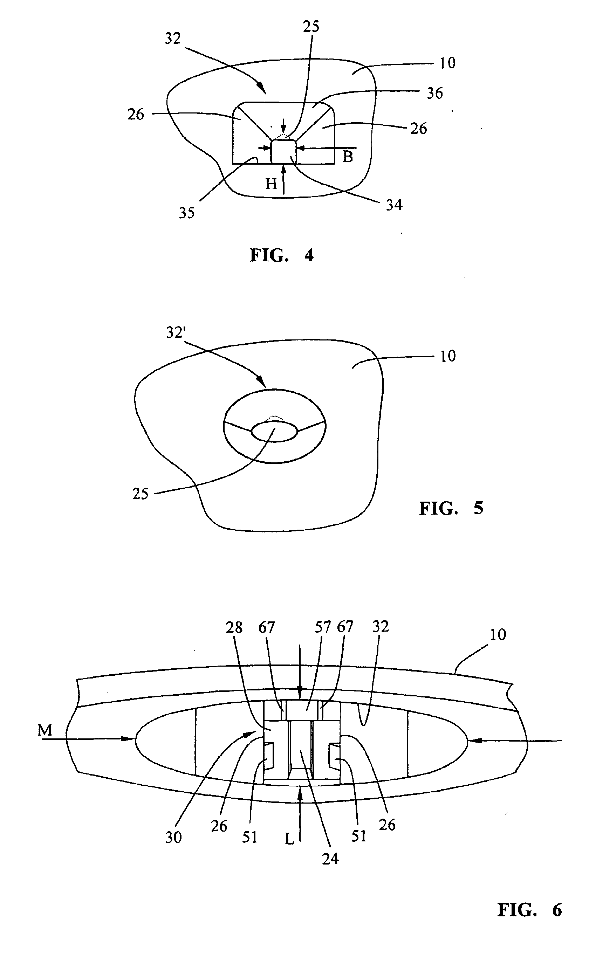

Mögliche Gestaltungen der Maulöffnung 32 sind in den Figuren 4, 5 und 6 wiedergegeben.

Fig. 4 zeigt eine schematische Stirnansicht auf die Maulöffnung 32, deren untere Fläche 35 etwa parallel zum Boden 42 bzw. zu der zu mähenden Rasenfläche 2 liegt. Die Seitenflächen 26 laufen nach innen aufeinander zu; die obere Fläche 36 bildet die Rampe 39, wobei die Fläche 36 auch durch Rippen (strichlierte Darstellung in Fig. 1) gebildet sein kann, die in Längsrichtung des Lademauls 30 verlaufen. Der Endquerschnitt 34 des Lademauls 30 ist größer als der Querschnitt des Grundkörpers 47 des Ladedorns 41, wobei die Breite B geringfügig größer als die Breite des Ladedorns 41 und die Höhe H geringfügig höher als die Höhe K (Fig. 1) des Kopfes 44 des Ladedorns 41 ist.

Es kann zweckmäßig sein, die Maulöffnung 32' kreis- oder ellipsenformig zu gestalten, wie dies in Fig. 5 dargestellt ist. Zweckmäßig hat dann der Querschnitt des Grundkörpers 47 des Ladedorns 41 eine entsprechend angepasste Geometrie.

Ist die Maulöffnung 32 durch Rangieren des selbstfahrenden Arbeitsgerätes 10 zum Ladedom 41 ausgerichtet, fährt das Arbeitsgerät 10 in Fahrtrichtung 1 in die Ladestation 40 ein. In der ausgerichteten Stellung liegt das äußere Ende 37 der Rampe 39 höher als der Kopf 44 des Ladedorns 41; im Ausführungsbeispiel liegt der obere Rand der Maulöffnung 32 um den Betrag z höher als der Kopf 44 des Ladedorns 41.

Beim Einfahren des Arbeitsgerätes in die Ladestation 40 wird der Kopf 44 des Ladedorns 41 in die Maulöffnung 32 eintreten und durch die aufeinander zulaufenden Seitenflächen 26 in Richtung zum Endquerschnitt 34 geführt. Dabei fährt die Rasterhebung 45 des Ladedoms 41 auf die Rampe 39 auf und gleitet an der Rampe 39 entlang. Der Ladedorn 41 der Ladestation 40 ist höhenfest angeordnet; beim Aufgleiten der Rampe 39 auf die Rasterhebung 45 des Ladedorns 41 wird daher das Arbeitsgerät 10 angehoben, wobei die Vorderräder 22 den Kontakt zum Boden 42 der Ladestation verlieren können. Über die angetriebenen Hinterräder 21 wird das Arbeitsgerät 10 in Fahrtrichtung 1 auf den Ladedorn 41 aufgeschoben, bis der Kopf 44 des Ladedorns 41 am Ende 38 der Rampe 39 angekommen ist und in die Rastaufnahme 25 eintritt, so dass das Arbeitsgerät 10 in der Ladestation gesichert ist. Anstelle der im Ausführungsbeispiel beschriebenen Verrastung können auch andere Vorrichtungen oder Elemente zur Sicherung des Arbeitsgerätes in der Ladestation zweckmäßig sein.

Wie Fig. 2 zeigt, wird das Arbeitsgerät 10 beim Einfahren in Pfeilrichtung 4 angehoben, bis das Ende 38 der Rampe 39 erreicht ist; bei der weiteren Vorwärtsbewegung in Fahrtrichtung 1 rastet die Rasterhebung 45 in die Rastaufnahme 25 ein und das Arbeitsgerät senkt sich in Pfeilrichtung 5 (Fig. 3) aufgrund der erzielten Verrastung unter der Wirkung der Schwerkraft.

In der verrasteten Stellung gemäß Fig. 3 wird der erste Gerätekontakt 51 in der einen Seitenfläche 26 des Lademauls 30 auf den zugeordneten ersten Ladekontakt 50 in der einen Seitenfläche 56 des Ladedorns 41 angedrückt. Entsprechend wird der zweite Gerätekontakt 51 in der anderen Seitenfläche 26 des Lademauls 30 auf den zugeordneten zweiten Ladekontakt 50 in der anderen Seitenfläche 56 des Ladedorns 41 angedrückt. Die Gerätekontakte 51 liegen somit - vorzugsweise unter Federkraft - an den zugeordneten Ladekontakten 50 des Ladedorns 41 an, so dass eine gute Kontaktierung im sauberen Inneren des Lademauls 30 gewährleistet ist. Auch bei hohen Ladeströmen tritt eine nur geringe Erwärmung auf, da der Übergangswiderstand zwischen den Ladekontakten und den Gerätekontakten gering gehalten werden kann.

Ist der Energiespeicher 15 aufgeladen, wird die Steuerung 17 dem Fahrantrieb 20 einen Steuerbefehl für Rückwärtsfahrt erteilen, so dass die auf der Rasenfläche 2 oder dem Boden 42 der Ladestation 40 kraftübetragend aufstehenden Hinterräder das Arbeitsgerät 10 entgegen Fahrtrichtung 1 von dem Ladedorn 41 ziehen. Da die Rasterhebung 45 und die Rastaufnahme 25 gerundet, vorzugsweise kugel- oder kugelkappenartig ausgebildet sind, kann durch die Antriebskraft des Fahrantriebes 20 in Rückwärtsrichtung die Verrastung gelöst werden. Die Rasterhebung 45 gleitet aus der Rastaufnahme 25 heraus und gibt das Arbeitsgerät 10 frei.

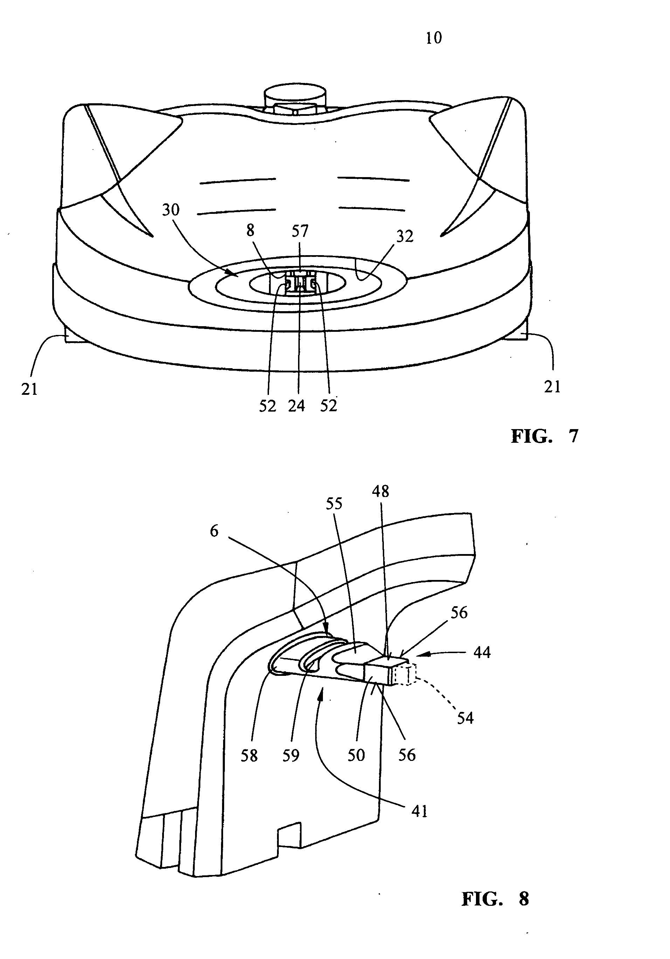

Das in Fig. 6 gezeigte Lademaul 30 eines in Fig. 7 dargestellten Arbeitsgerätes 10 hat eine Maulöffnung 32, welche elliptisch ausgebildet ist. Die in der Horizontalen gemessene Breite M der Maulöffnung 32 ist um ein Mehrfaches größer als deren Höhe L; vorzugsweise ist die Breite M der Maulöffnung 32 etwa 2 bis 6 mal größer als die Höhe L der Maulöffnung 32, insbesondere etwa 4 mal größer als die Höhe L. Diese Ausbildung gewährleistet auch bei Stellungsfehlern des Arbeitsgerätes 10 zur Ladestation 40 ein sicheres Fangen und Einfahren des Ladedorns 41 in das Lademaul 30.

Wie sich aus der vergrößerten Darstellung in Fig. 6 ergibt, sind in den Seitenflächen 26 des Lademauls 30 Gerätekontakte 51 angeordnet, wobei - wie im Ausführungsbeispiel nach den Fig. 1 bis 3 - jeder Seitenfläche 26 ein Gerätekontakt 51 zugeordnet ist. Die Gerätekontakte 51 liegen im Bereich des inneren Endes des Lademauls 30, wobei in der Stirnwand 28 des Lademauls 30 eine Zentrieraufnahme 24 ausgebildet ist, in die eine Zentriernase 54 (Fig. 8) des Ladedorns 41 einfährt.

Die Zentriernase 54 bildet das freie Ende eines Ladedorns 41, wie er in Fig. 8 als weiteres Ausführungsbeispiel dargestellt ist. Der Ladedorn 41 trägt in seinen beiden Seitenflächen 56 je einen Ladekontakt 50, wobei die Ladekontakte 50 den Gerätekontakten 51 im Lademaul 30 zugeordnet sind. Die Ladekontakte 50 sind im Bereich des freien Endes des Ladedorns 41 angeordnet, zweckmäßig direkt hinter der Zentriernase 54, die das freie Ende des Ladedorns 41 bildet.

Im Bereich des festen Endes 58 des Ladedorns 41 ist in dessen Oberseite 48 eine Rastvertiefung 59 ausgebildet. Die Rastvertiefung 59 liegt am Ende einer am Ladedorn 41 ausgebildeten Rampe 55, die auf der Oberseite 48 des Ladedorns 41 ausgebildet ist.

Fährt das Arbeitsgerät 10 mit seinem Lademaul 30 in der Ausbildung nach Fig. 6 auf den Ladedorn 41 auf, so wird der Ladedorn 41 über die Wandungen des Lademauls 41 zielgerichtet geführt in dem Lademaul 41 aufgenommen. Dabei gleitet eine im Lademaul 41 angeordnete Querrippe 57, die zur Führung mit Längsrippen 67 kombiniert sein kann, auf die Rampe 55 des Ladedorns 41 auf und hebt das Arbeitsgerät 10 leicht an. Der Antrieb des Arbeitsgerätes 10 schiebt das Lademaul 30 weiter über den Ladedorn 41, bis die Zentriernase 54 in die Zentrieraufnahme 24 in der Stirnwand 28 eintaucht und der Einführvorgang beendet ist. In dieser Stellung liegen die Ladekontakte 50 des Ladedorns 41 an den Gerätekontakten 51 im Lademaul 30 des Arbeitsgerätes 10 an. In dieser Ladestellung ist das Arbeitsgerät mit der Ladestation 40 verrastet, wozu die Querrippe 57 in die Rastvertiefung 59 auf der Oberseite 48 des Ladedorns 41 verrastend eingreift.

Die Verrastung des Arbeitsgerätes 10 mit der Ladestation 40 ist derart ausgebildet, dass sie über den Antrieb des Arbeitsgerätes 10 ohne Weiteres zu lösen ist. Das Arbeitsgerät 10 kann von den angetriebenen Hinterrädern 21 aus der Raststellung an der Ladestation 40 gelöst werden.

Es kann vorteilhaft sein, zwischen der Zentriernase 54 und der Zentrieraufnahme 24 eine Verrastung vorzusehen, z. B. einen Kugelrastverschluss oder dgl..

In der Ladestellung des Arbeitsgerätes in der Ladestation 40 liegt der Ladedorn 41 im Lademaul 30 und füllt dieses zweckmäßig derart aus, dass er nach Art eines Stopfens das Lademaul 30 verschließt. Dadurch ist auch ein Berührschutz der Kontakte während des Ladevorgangs erreicht.

Es kann zweckmäßig sein, am Boden 42 der Ladestation 40 eine Bodenrampe 60 vorzusehen, die einerseits ein Anheben des Arbeitsgerätes 10 beim Aufgleiten auf den Ladedorn 41 unterstützt. Dadurch kann die Antriebsleistung zum Auffahren auf den Ladedom 41 reduziert werden. Vorteilhaft kann in der Bodenrampe 60 eine Radvertiefung 61 vorgesehen sein, über die ebenfalls in der Ladestellung eine Verrastung des Arbeitsgerätes 10 mit der Ladestation 40 ausgeführt sein kann.

## Patentansprüche

1. Ladevorrichtung für ein selbstfahrendes Arbeitsgerät (10) mit einem Gehäuse (11), in dem ein elektrischer Antriebsmotor (12) zum Antrieb eines Arbeitswerkzeugs (13) und ein elektrischer Fahrantrieb (20) angeordnet sind, mit einem im Gehäuse (11) angeordneten, wiederaufladbaren Energiespeicher (15), der mindestens einen elektrischen Gerätekontakt (51) aufweist, und nach Einfahren des Arbeitsgerätes (10) in eine Ladestation (40) zum Aufladen des Energiespeichers (15) der elektrische Gerätekontakt (51) an einem elektrischen Ladekontakt (50) der Ladestation (40) kontaktierend anliegt,
**dadurch gekennzeichnet, dass** im Gehäuse (11) ein nach außen offenes Lademaul (30) ausgebildet ist und der Gerätekontakt (51) im Inneren des Lademauls (30) vorgesehen ist, dass das Lademaul (30) zum Einführen eines Ladedorns (41) der Ladestation (40) angepasst ausgebildet ist, wobei der Ladedorn (41) den dem Gerätekontakt (51) zugeordneten Ladekontakt (50) der Ladestation (40) trägt, und dass das in die Ladestation (40) eingefahrene Arbeitsgerät (10) in der Ladestellung in der Ladestation (40) gesichert ist.

2. Ladevorrichtung nach Anspruch 1,
**dadurch gekennzeichnet, dass** das in die Ladestation (40) eingefahrene Arbeitsgerät (10) in der Ladestellung an der Ladestation (40) verrastet ist.

3. Ladevorrichtung nach Anspruch 2,
**dadurch gekennzeichnet, dass** der Ladedorn (41) ein Rastelement (6) aufweist, das in der in der Ladestation (40) eingefahrenen Ladestellung des Arbeitsgerätes (10) mit einem Rastgegenelement (8) des Arbeitsgerätes (10) verrastend zusammenwirkt.

4. Ladevorrichtung nach Anspruch 3,
**dadurch gekennzeichnet, dass** das Rastgegenelement (8) am Lademaul (30) vorgesehen ist.

5. Ladevorrichtung nach Anspruch 3 oder 4,
**dadurch gekennzeichnet, dass** das Rastelement (6) eine am Ladedorn (30) ausgebildete Rasterhebung (45) und das Rastgegenelement (8) eine im Lademaul (30) ausgebildete Rastaufnahme (25) ist.

6. Ladevorrichtung nach Anspruch 3 oder 4,
**dadurch gekennzeichnet, dass** das Rastelement (6) eine am Ladedorn (41) ausgebildete Rastvertiefung (59) und das Rastgegenelement (8) eine im Lademaul (30) ausgebildete Querrippe (57) ist.

7. Ladevorrichtung nach einem der Ansprüche 1 bis 6,
**dadurch gekennzeichnet, dass** eine in Fahrtrichtung (1) auf den Ladedorn (41) ansteigende Rampe (39) vorgesehen ist, die beim Einfahren des Arbeitsgerätes (10) in die Ladestation (40) das Arbeitsgerät (10) anhebt, bis das Rastelement (6) mit dem Rastgegenelement (8) verrastet ist.

8. Ladevorrichtung nach Anspruch 7,
**dadurch gekennzeichnet, dass** die Rampe (39) als eine das Lademaul (30) begrenzende Gehäusefläche ausgebildet ist, die in Fahrtrichtung (1) des Arbeitsgerätes (10) in die Ladestation (40) auf den Ladedorn (41) aufläuft.

9. Ladevorrichtung nach Anspruch 8,
**dadurch gekennzeichnet, dass** die Rampe (39) aus in Längsrichtung des Lademauls (30) verlaufenden Rippen ausgebildet ist.

10. Ladevorrichtung nach einem der Ansprüche 8 oder 9,
**dadurch gekennzeichnet, dass** die Rampe (39) an ihrem im Lademaul (30) liegenden inneren Ende (38) in die Rastaufnahme (25) übergeht.

11. Ladevorrichtung nach einem der Ansprüche 8 bis 10,
**dadurch gekennzeichnet, dass** eine Rasterhebung (45) des Ladedorns (41) am freien Ende des Ladedorns (41) angeordnet ist und der Rampe (39) zugewandt liegt.

12. Ladevorrichtung nach einem der Ansprüche 1 bis 11,
**dadurch gekennzeichnet, dass** die Maulöffnung (32) des Lademauls (30) größer, vorzugsweise mehrfach größer ist als die Kontur des freien Endes des Ladedorns (41).

13. Ladevorrichtung nach einem der Ansprüche 1 bis 12,
**dadurch gekennzeichnet, dass** das Rastelement (6) und das Rastgegenelement (8) gerundet ausgebildet sind, vorzugsweise kugel- oder kugelkappenartig gerundet sind.

14. Ladevorrichtung nach einem der Ansprüche 1 bis 13,
**dadurch gekennzeichnet, dass** sich das Lademaul (30) in einer Längsrichtung erstreckt, die der Fahrtrichtung (1) des Arbeitsgerätes (10) in die Ladestation (40) entspricht.

15. Ladevorrichtung nach einem der Ansprüche 1 bis 5,
**dadurch gekennzeichnet, dass** das Lademaul (30) sich in Fahrtrichtung (1) auf den Ladedorn (41) erstreckende, innere, den Ladedorn (41) führende Flächen (26, 35, 36) aufweist.

16. Ladevorrichtung nach einem der Ansprüche 1 bis 15,
**dadurch gekennzeichnet, dass** die Ladekontakte (50) des Ladedorns (41) an dessen einander abgewandten Seitenflächen (26) angeordnet sind und die Gerätekontakte (51) in den zu den Seitenflächen (56) des Ladedorns benachbarten Seitenflächen (26) im Lademaul (30) liegen.

## Claims

1. Charging device for a self-propelled work unit (10), having a housing (11), in which an electric drive motor (12) to drive a work tool (13) and an electric traction drive (20) are arranged, having a rechargeable energy storage unit (15) arranged in the housing (11), which has at least one electrical unit contact (51), and after the work unit (10) has been moved into a charging station (40) to charge the energy storage unit (15) the electrical unit contact (51) lies in contact against an electrical charging contact (50) of the charging station (40),
**characterised in that** an outwardly open loading jaw (30) is formed in the housing (11) and the unit contact (51) is provided inside the loading jaw (30), the loading jaw (30) is designed for introduction of a charging mandrel (41) adapted to the charging station (40), wherein the charging mandrel (41) carries the charging contact (50) of the charging station (40), assigned to the unit contact (51), and the work unit (10) that has moved into the charging station (40) is secured in the charging position in the charging station (40).

2. Charging device according to claim 1,
**characterised in that** the work unit (10) that has moved into the charging station (40) is locked in the charging position at the charging station (40).

3. Charging device according to claim 2,
**characterised in that** the charging mandrel (41) has a detent element (6) which interacts to lock with a counter-detent element (8) of the work unit (10) when the work unit (10) has been moved into the charging position in the charging station (40).

4. Charging device according to claim 3,
**characterised in that** the counter-detent element (8) is provided on the loading jaw (30).

5. Charging device according to claim 3 or 4,
**characterised in that** the detent element (6) is a raised engagement area (45) formed on the charging mandrel (30) and the counter-detent element (8) is a receiving area (25) formed in the loading jaw (30).

6. Charging device according to claim 3 or 4,
**characterised in that** the detent element (6) is a detent depression (59) formed on the charging mandrel (41) and the counter-detent element (8) is a transverse rib (57) formed in the loading jaw (30).

7. Charging device according to one of claims 1 to 6,
**characterised in that** a ramp (39) ascending in the travel direction (1) onto the charging mandrel (41) is provided, which raises the work unit (10) when the work unit (10) is moved into the charging station (40) until the detent element (6) engages with the counter-detent element (8).

8. Charging device according to claim 7,
**characterised in that** the ramp (39) is formed as a housing surface delimiting the loading jaw (30) and running in the travel direction (1) of the work unit (10) into the charging station (40) onto the charging mandrel (41).

9. Charging device according to claim 8,
**characterised in that** the ramp (39) is formed from ribs extending in the longitudinal direction of the loading jaw (30).

10. Charging device according to one of claims 8 or 9,
**characterised in that** the ramp (39) transforms at its inner end (38) lying in the loading jaw (30) into the detent receiving area (25).

11. Charging device according to one of claims 8 to 10,
**characterised in that** a raised engagement area (45) of the charging mandrel (41) is arranged at the free end of the charging mandrel (41) and lies facing the ramp (39).

12. Charging device according to one of claims 1 to 11,
**characterised in that** the jaw opening (32) of the loading jaw (30) is larger, preferably many times larger, than the contour of the free end of the charging mandrel (41).

13. Charging device according to one of claims 1 to 12,
**characterised in that** the detent element (6) and the counter-detent element (8) are formed rounded, preferably being rounded spherically or in the manner of a spherical cap.

14. Charging device according to one of claims 1 to 13,
**characterised in that** the loading jaw (30) extends in a longitudinal direction which corresponds to the travel direction (1) of the work unit (10) into the charging station (40).

15. Charging device according to one of claims 1 to 5,
**characterised in that** the loading jaw (30) has inner surfaces (26, 35, 36) guiding the charging mandrel (41) and extending in the travel direction (1) onto the charging mandrel (41).

16. Charging device according to one of claims 1 to 15,
**characterised in that** the charging contacts (50) of the charging mandrel (41) are arranged on side faces (26) thereof facing away from each other and the unit contacts (51) lie in the side faces (26) in the loading jaw (30) adjacent to the side faces (56) of the charging mandrel.

## Revendications

1. Dispositif de charge pour un appareil de travail autopropulsé (10) avec un boîtier (11) dans lequel sont disposés un moteur d'entraînement électrique (12) pour entraîner un outil (13), et un entraînement électrique de déplacement (12), avec un réservoir d'énergie (15) rechargeable qui est disposé dans le boîtier (11) et qui comporte au moins un contact électrique d'appareil (51), et après que l'appareil (10) est entré dans une station de charge (40) pour charger le réservoir d'énergie (15), le contact électrique d'appareil (51) est appliqué par contact contre un contact électrique de charge (50) de ladite station de charge (40),
**caractérisé en ce qu'**un dégagement de charge (30) ouvert vers l'extérieur est formé dans le boîtier (11), et le contact d'appareil (51) est prévu à l'intérieur du dégagement de charge (30), **en ce que** le dégagement de charge (30) est conçu en étant adapté pour l'introduction d'une broche de charge (41) de la station de charge (40), étant précisé que la broche de charge (41) porte le contact de charge (50), associé au contact d'appareil (51), de la station de charge (40), et **en ce que** l'appareil (10) qui est entré dans la station (40) est bloqué dans la position de charge dans ladite station (40).

2. Dispositif de charge selon la revendication 1,
**caractérisé en ce que** l'appareil (10) qui est entré dans la station de charge (40) est verrouillé dans la position de charge sur ladite station (40).

3. Dispositif de charge selon la revendication 2,
**caractérisé en ce que** la broche de charge (41) comporte un élément de verrouillage (6) qui, dans la position de charge de l'appareil (10) entré dans la station de charge (40), coopère avec un élément de verrouillage opposé (8) dudit appareil (10) en vue d'un verrouillage.

4. Dispositif de charge selon la revendication 3,
**caractérisé en ce que** l'élément de verrouillage opposé (8) est prévu sur le dégagement de décharge (30).

5. Dispositif de charge selon la revendication 3 ou 4,
**caractérisé en ce que** l'élément de verrouillage (6) est une saillie de verrouillage (45) formée sur la broche de charge (30), et l'élément de verrouillage opposé (8) est une cavité de verrouillage (25) formée dans le dégagement de charge (30).

6. Dispositif de charge selon la revendication 3 ou 4,
**caractérisé en ce que** l'élément de verrouillage (6) est un creux de verrouillage (59) formé sur la broche de charge (41), et l'élément de verrouillage opposé (8) est une nervure transversale (57) formée dans le dégagement de charge (30).

7. Dispositif de charge selon l'une des revendications 1 à 6,
**caractérisé en ce qu'**il est prévu une rampe (39) qui monte dans le sens d'arrivée (1) sur la broche de charge (41) et qui, lorsque l'appareil (10) entre dans la station de charge (40), soulève ledit appareil (10) jusqu'à ce que l'élément de verrouillage (6) soit verrouillé avec l'élément de verrouillage opposé (8).

8. Dispositif de charge selon la revendication 7,
**caractérisé en ce que** la rampe (39) est conçue comme une surface de boîtier qui limite le dégagement de charge (30) et qui monte sur la broche de charge (41) dans le sens d'arrivée (1) de l'appareil (10) dans la station de charge (40).

9. Dispositif de charge selon la revendication 8,
**caractérisé en ce que** la rampe (39) se compose de nervures qui s'étendent dans le sens longitudinal du dégagement de charge (30).

10. Dispositif de charge selon l'une des revendications 8 ou 9,
**caractérisé en ce que** la rampe (39), à son extrémité intérieure (38) située dans le dégagement de charge (30), se prolonge par la cavité de verrouillage (25).

11. Dispositif de charge selon l'une des revendications 8 à 10,
**caractérisé en ce qu'**une saillie de verrouillage (45) de la broche de charge (41) est disposée à l'extrémité libre de ladite broche de charge (41) et est tournée vers la rampe (39).

12. Dispositif de charge selon l'une des revendications 1 à 11,
**caractérisé en ce que** l'ouverture (32) du dégagement de charge (30) est plus grande, de préférence plusieurs fois plus grande, que le contour de l'extrémité libre de la broche de charge (41).

13. Dispositif de charge selon l'une des revendications 1 à 12,
**caractérisé en ce que** l'élément de verrouillage (6) et l'élément de verrouillage opposé (8) ont une forme arrondie, de préférence du type sphérique ou en forme de calotte sphérique.

14. Dispositif de charge selon l'une des revendications 1 à 13,
**caractérisé en ce que** le dégagement de charge (30) s'étend dans un sens longitudinal qui correspond au sens d'arrivée (1) de l'appareil (10) dans la station de charge (40).

15. Dispositif de charge selon l'une des revendications 1 à 5,
**caractérisé en ce que** le dégagement de charge (30) présente des surfaces (26, 35, 36) intérieures qui s'étendent dans le sens d'arrivée (1) sur la broche de charge (41) et qui guident celle-ci.

16. Dispositif de charge selon l'une des revendications 1 à 15,
**caractérisé en ce que** les contacts de charge (50) de la broche de charge (41) sont disposés sur les surfaces latérales (26) de celle-ci qui sont opposées l'une à l'autre, et les contacts d'appareil (51) sont situés dans le dégagement de charge (30) dans les surfaces latérales (26) voisines des surfaces latérales (56) de la broche de charge.
